# EUROPEAN PATENT SPECIFICATION

(11) **EP 4 361 362 B1**
(45) Date of publication and mention of the grant of the patent: **15.04.2026**
(21) Application number: 22828258.8
(22) Date of filing: 14.06.2022
(51) Int. Cl.: E03D 5/016, E03D 11/00, C02F 1/00, E03D 7/00, H02S 10/00

(54) **CIRCULATION-TYPE TOILET UNIT**
ZIRKULATIONSTOILETTENEINHEIT
UNITÉ DE TOILETTES DU TYPE À CIRCULATION

(30) Priority: 21.06.2021 JP 2021102322; 21.06.2021 JP 2021102323
(43) Date of publication of application: 01.05.2024
(73) Proprietor: NTN Corporation, Osaka-shi, Osaka 530-0005 (JP)
(72) Inventor: ONO, Kouhei, Kuwana-shi, Mie 511-0867 (JP)
(74) Representative: Cabinet Netter
(86) International application number: PCT/JP2022/023704
(87) International publication number: WO 2022/270341

(56) References cited:
- JP-A- 2006 057 417
- JP-A- 2010 222 869
- JP-A- 2010 222 869
- JP-A- 2012 246 738
- JP-A- 2013 047 420
- JP-A- 2016 089 538
- JP-A- H1 077 673
- JP-A- H11 350 759
- RU-C2- 2 645 447

## Description

### BACKGROUND OF THE INVENTION

### (Field of the Invention)

The present invention relates to a recirculating toilet unit that utilizes natural energy.

### (Description of Related Art)

There are two primary types of simple toilets: (i) a vault toilet; and (ii) a recirculation toilet using a grid power system.

The vault toilet can be readily installed. However, it requires emptying on a regular basis and is poor in terms of sanitation.

The recirculation toilet requires access to a grid power system and, therefore, installation locations of the recirculation toilet is limited.

### [Related Document]

### [Patent Document]

[Patent Document 1] JP Laid-open Patent Publication No. 2020-037825

### SUMMARY OF THE INVENTION

A recirculation toilet with features to exploit power generated using a solar panel, etc. for powering, for example, a pump for recirculating flushing water is proposed in the art (Patent Document 1). This recirculation toilet can even be used at locations where there is no access to a grid power system, but requires a control device, which is used for operating, *inter alia,* a plurality of treatment tanks and pumps for subjecting the waste flushed down from the toilet with flushing water to a cascade of treatments. Such a control device must be transported separately from the toilet to a location where they are to be installed. This gives rise to a concern that the overall installation cost of the recirculation toilet may increase.

Other recirculating toilet units are disclosed in JP2010222869A and JPH1077673A. Both these documents disclose a purification equipment powered with natural energy. JP2010222869A is seen as the closest prior art.

An object of the present invention is to provide a clean, recirculating toilet unit which has a wider range of possibilities for its installation locations and which has an excellent transportability and can, therefore, lead to a reduced installation cost.

In particular, an object of the present invention is to allow better control of power using devices in such recirculating toilet unit using natural power.

A recirculating toilet unit according to the present invention includes:
a recirculation toilet including purification equipment and configured to recirculate flushing water through the purification equipment;
a power generation unit including at least one power generator selected from a wind turbine generator and a photovoltaic generator, the power generation unit configured to provide a load (electrical load) of the purification equipment with power from the power generator for recirculation and purification of the flushing water; and
a structure which carries the recirculation toilet and the power generation unit, the structure being transportable.

The load in this context refers to electrically operated devices, including a blower configured to introduce air into a treatment tank, etc. of the purification equipment and a pump configured to pump the flushing water.

Such a configuration permits use of a natural energy power generator, e.g., the wind turbine generator or the photovoltaic generator, to provide power to a load of the purification equipment, thereby making it possible to cleanly operate and maintain the recirculating toilet unit even at locations where there is no access to a grid power system. Thus, the possibilities for installation locations of the recirculating toilet unit can be increased. Further, the recirculating toilet unit also includes a structure which carries the recirculation toilet and the power generation unit, the structure being transportable. Hence, the structure with the recirculation toilet and the power generation unit mounted thereto can be transported and installed altogether in an integrated fashion, thereby making it possible to install the recirculating toilet unit more conveniently than a conventional counterpart which requires separate transportation of a toilet bowl, a plurality of treatment tanks, a control device, etc. before installation. As such, a recirculating toilet unit which has an excellent transportability and can, therefore, lead to a reduced installation cost can be realized.

The recirculating toilet unit may further include a solar panel separate from the photovoltaic generator and configured to produce power supply for the load, the solar panel being capable of being connected to and disconnected from an electrical connection unit provided to the structure. In the case where the recirculating toilet unit includes a separate solar panel, it is possible to provide additional power generation. If, however, the separate solar panel is fixed on the ground or the like, it may not be possible to ensure transportability of the structure, i.e., the recirculating toilet unit in the event of emergency, etc. For this reason, the solar panel is capable of being connected to and disconnected from an electrical connection unit provided to the structure, so that convenient transfer of the recirculating toilet unit can be facilitated.

The power generation unit may include a grid power system connection unit configured to receive power supplied from a grid power system. This, for example, makes it possible to use the wind turbine generator or the photovoltaic generator as a primary power supply while using the grid power system to compensate for temporary shortage of power generation or, alternatively, to use the grid power system as a primary power supply while utilizing the wind turbine generator or the photovoltaic generator as a backup power supply in the event of a power outage, once the recirculating toilet unit is installed at a location where it can connect to the grid power system.

The power generation unit may include a control device configured to apply a control to supply the load with power generated by the power generator. The control implemented by the control device in this context involves directing power generated by the power generator into a battery, etc. and drawing the directed power to the load.

The control device according to the invention includes a user number counting module configured to count the number of users of the recirculation toilet and a load operating condition adjuster configured to adjust an operating condition of the load as a function of the number of users counted by the user number counting module.

The phrase "adjust an/the operating condition of a/the load" means varying the power of the blower or varying the capacity of an ozone generator. The same also applies to the phrase "adjust an/the operating condition of a/the load as a function of a/the contamination level" used below.

The control device may include a contamination level determining module configured to determine a contamination level of the purification equipment and a load operating condition adjuster configured to adjust an operating condition of the load as a function of the contamination level determined by the contamination level determining module.

A blower and an ozone generator, which are examples of the load in the purification equipment, are operated, for instance, at all times. If the number of users of the recirculation toilet is small due to infrequent use of the recirculation toilet - thus, if the contamination level of the purification equipment is low - then, the load such as a blower may be driven to a lesser degree. The load operating condition adjuster adjusts an operating condition of the load as a function of the number of users or the contamination level. Thus, the power used to drive the load can be saved while cleanly operating and maintaining the recirculating toilet unit.

The structure may comprise a shipping container. In this case, the structure can be transferred using a variety of transport means such as truck, railroad, ship, and airplane. With an excellent robustness, the shipping container can protect devices and others stored therein against possible malfunctions that may be caused by vibrations and impacts during transportation.

The control device may include a mechanism configured to disable use of the recirculation toilet once a use state of the recirculation toilet exceeds a criterion value or once a level power generated by the power generator for storage drops down to or below a threshold value. The mechanism configured to disable use of the recirculation toilet may comprise an indication device, such as a display panel or light, configured to indicate that the recirculation toilet cannot be used, and/or an automatic lock module configured to lock an openable and closable door of the recirculation toilet.

The load in this context refers to electrically operated devices, including a blower configured to introduce air into a treatment tank, etc. of the purification equipment and a pump configured to pump the flushing water.

The use state in this context refers to the number of users of the recirculation toilet or a contamination level of the purification equipment. For example, a sensor(s) is used to detect the number of users and/or the contamination level.

The criterion value and the threshold value in this context are each defined as appropriate during, for example, a design phase. For instance, appropriate values are determined and defined through at least one of experiments or simulations.

Such a configuration permits use of a natural energy power generator, e.g., the wind turbine generator or the photovoltaic generator, to provide power to a load of the purification equipment, thereby making it possible to cleanly operate and maintain the recirculating toilet unit even at locations where there is no access to a grid power system. Thus, the possibilities for installation locations of the recirculating toilet unit can be increased.

The automatic lock module is configured to lock the openable and closable door of the recirculation toilet, once the use state of the recirculation toilet exceeds the criterion value or once the level of power generated by the power generator for storage drops down to or below the threshold value. Conversely, the automatic lock module is configured to unlock the openable and closable door of the recirculation toilet, once the use state of the recirculation toilet returns to the criterion value or lower, or once the level of power generated exceeds the threshold value. By thus restricting use of the recirculation toilet when the treatment throughput of the recirculating toilet unit does not keep up with the demand or when the level of power generated is inadequate, it is possible to continue cleanly operating and maintaining the recirculating toilet unit.

It should be noted that the mechanism configured to disable use of the recirculation toilet may include, for example, an indication device, such as a display panel or light, configured to indicate that the recirculation toilet cannot be used, as an alternative to or in combination with the automatic lock module configured to lock the openable and closable door.

The recirculating toilet unit may further include an indication device configured to indicate whether the recirculation toilet can or cannot be used, and the control device may be configured to cause the indication device to indicate that the recirculation toilet cannot be used, once the criterion value is exceeded or once the level of power generated drops down to or below the threshold value. By thus causing the indication device to indicate whether the recirculation toilet can or cannot be used, the usability of the recirculation toilet for those who want to use the recirculation toilet can be improved.

The recirculating toilet unit may include a grid power system connection unit configured to supply the load with power from a grid power system, and the control device may be configured to apply a control to supply the load with power via the grid power system connection unit. This, for example, makes it possible to use the wind turbine generator or the photovoltaic generator as a primary power supply while using the grid power system to compensate for temporary shortage of power generation or, alternatively, to use the grid power system as a primary power supply while utilizing the wind turbine generator or the photovoltaic generator as a backup power supply in the event of a power outage, once the recirculating toilet unit is installed at a location where it can connect to the grid power system.

The recirculating toilet unit may further include a communication device configured to allow the openable and closable door to be remotely locked or unlocked. For instance, a person or entity responsible for the management of the recirculating toilet unit can use the communication device to remotely lock or unlock the openable and closable door, provided that said person or entity can monitor the number of users of the recirculation toilet and/or the contamination level of the purification equipment over a network, etc. In this way, the usability of the recirculation toilet for those who want to use the recirculation toilet can be further improved.

The structure may carry the control device mounted thereto in addition to the recirculation toilet and the power generator. In this case, the structure with the recirculation toilet, the power generator, and the control device mounted thereto can be transported and installed altogether in an integrated fashion, thereby making it possible to install the recirculating toilet unit more conveniently than those which require separate transportation of a toilet bowl, a plurality of treatment tanks, a control device, etc. before installation. As such, a recirculating toilet unit which has an excellent transportability and can, therefore, lead to a reduced installation cost can be realized.

### BRIEF DESCRIPTION OF THE DRAWINGS

The present invention will be more clearly understood from the following description of preferred embodiments made on the basis of the accompanying drawings. However, the embodiments and the drawings are given merely for the purpose of illustration and explanation, and should not be used to delimit the scope of the present invention, which scope is to be delimited by the appended claims. In the accompanying drawings, alike numerals are assigned to and indicate alike parts throughout the different figures, and:
Fig. 1 shows a perspective view of the interior of a structure of a recirculating toilet unit in accordance with an embodiment of the present invention, as viewed from the front;
Fig. 2 shows a perspective view of the interior of the structure of the recirculating toilet unit as viewed from the rear;
Fig. 3 shows a perspective view of the recirculating toilet unit with an openable and closable door closed;
Fig. 4 shows a perspective view of the recirculating toilet unit with the openable and closable door opened;
Fig. 5 shows a block diagram that illustrates the concept configuration of a control system for the recirculating toilet unit;
Fig. 6 shows a block diagram of a control device of the recirculating toilet unit;
Fig. 7 shows a block diagram of a control device of the recirculating toilet unit in accordance with a variant embodiment;
Fig. 8 shows a perspective view of the recirculating toilet unit with the openable and closable door closed;
Fig. 9 shows a perspective view of an example process for installing the recirculating toilet unit;
Fig. 10 shows a perspective view of a recirculating toilet unit in accordance with another embodiment of the present invention, with an openable and closable door opened; and
Fig. 11 shows a perspective view of the recirculating toilet unit with the openable and closable door opened.

### DESCRIPTION OF EMBODIMENTS

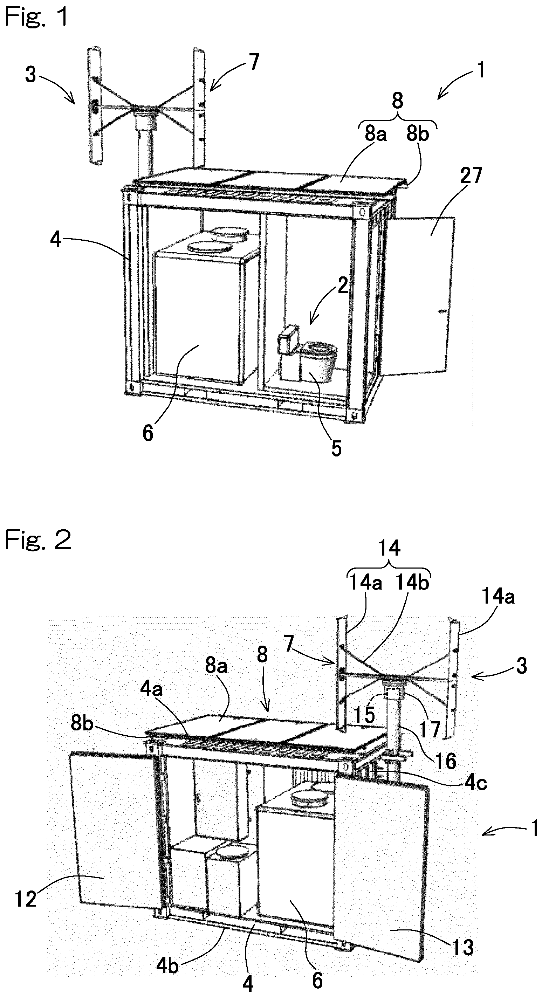

An embodiment of the present invention will be described in connection with Figs. 1 to 9.

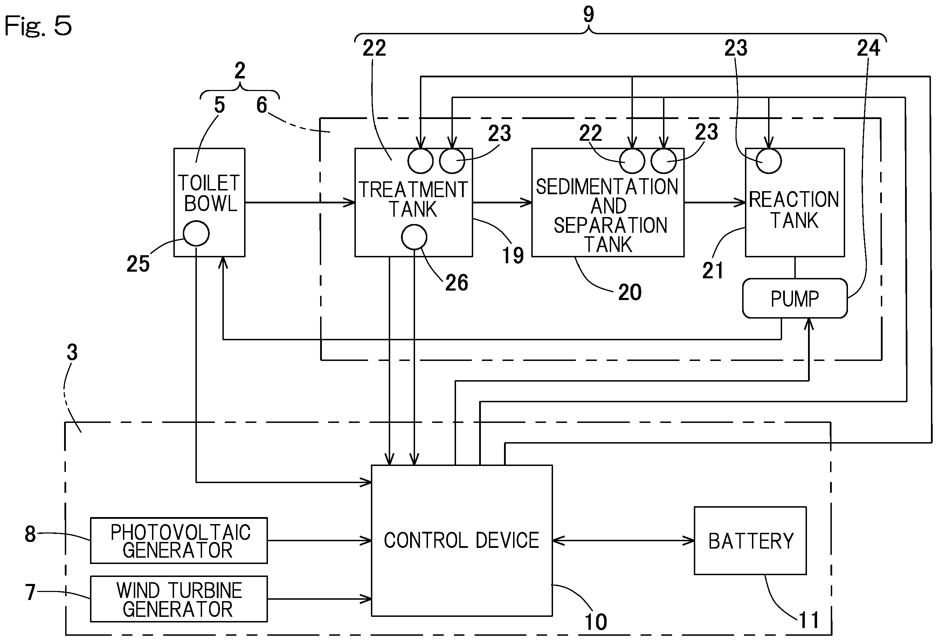

As illustrated in Fig. 1, a recirculating toilet unit 1 in accordance with an embodiment of the present invention includes a recirculation toilet 2, a power generation unit 3, and a structure 4 which carries the recirculation toilet 2 and the power generation unit 3. The recirculation toilet 2 includes a toilet bowl 5 and purification equipment 6 and passes flushing water containing waste and discharged from the toilet bowl 5, through the purification equipment 6 to recirculate the water. The power generation unit 3 includes: both of a wind turbine generator 7 and a photovoltaic generator 8 as natural energy power generators; a control device 10 (Fig. 5) which controls the supply of power generated by the power generators 7, 8 to a load 9 (Fig. 5) of the purification equipment 6; and a battery 11 (Fig. 5) which is in the form of a rechargeable battery.

### <Structure 4>

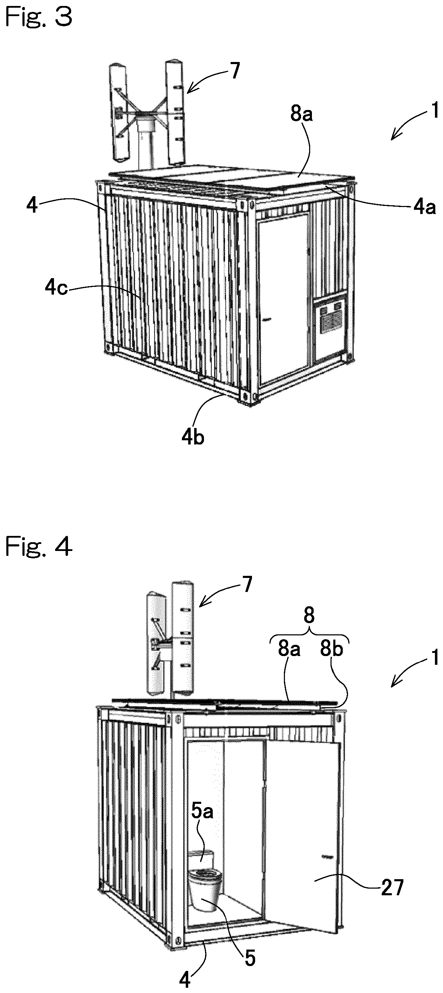

The structure 4 houses the recirculation toilet 2 as well as the control device 10 and the battery 11 (Fig. 5) of the power generation unit 3. Referring to Fig. 2, the structure 4 is transportable and is a robust, box-shaped structure including double doors 12, 13 through which the toilet bowl 5 (Figs. 1 and 4), the purification equipment 6, and the power generation unit 3 can be carried in and out. As illustrated in Fig. 3, the structure 4 includes a top wall 4a and a bottom wall 4b that are substantially rectangular in shape, and four peripheral walls 4c between the top wall 4a and the bottom wall 4b, thereby forming a generally cuboidal shape as a whole. In particular, the structure 4 comprises a shipping container.

The "shipping container" used herein is preferably a container having a size that complies with a standard for freight transport containers - such as, for example, a domestic standard for freight containers of a country in which the container is transported. For instance, the "standard" in this context may be a standard established by a relevant domestic administrative agency in that country or an international organization such as the International Organization for Standardization (ISO), or may even be a JR container which serves as a de-facto standard for railroad freight transport containers in Japan.

Being configured as a shipping container, the structure 4 can be transferred using a variety of transport means such as truck, railroad, ship, and airplane. With an excellent robustness, the shipping container can also protect devices and others stored therein against possible malfunctions that may be caused by vibrations and impacts during transportation.

### <Wind Turbine Generator 7>

As illustrated in Fig. 2, the wind turbine generator 7 includes a wind turbine 14 and a generator 15 that can be driven by the wind turbine 14 to generate power. The wind turbine 14 is configured as a vertical axis wind turbine. In particular, the wind turbine 14 includes a plurality of blades 14a (e.g., two blades 14a in the instant example) and a blade support 14b providing support for the blades 14a. Each of the blades 14a extends in the vertical direction, whereas the blade support 14b is supported on an upper end of a tower 16 so as to be rotatable about the vertical axis by means of a bearing arrangement (not shown). The two blades 14a are positioned angularly apart from each other by 180 degrees about the axis of the tower 16. Further, the tower 16 is secured centrally to an upper part of one of the peripheral walls 4c of the structure 4.

The generator 15 of the wind turbine generator 7 is disposed inside a generator casing 17 that is attached to the top of the tower 16. Stationary race(s) of the bearing arrangement is/are fitted to the generator casing 17, whereas rotary race(s) of the bearing arrangement is/are coupled to the blade support 14b. The generator 15 generates power as a rotor of the generator 15 rotates inside the generator casing 17 along with the rotary race(s) in response to the revolutions of the wind turbine 14. For example, an induction generator or a synchronous generator can be used for the generator 15.

A vertical axis wind turbine is suited as the wind turbine 14 for use with the wind turbine generator 7 that is provided to the transportable structure 4 in that a vertical axis wind turbine can be configured in a relatively small size but still can receive wind to generate power. Nevertheless, the wind turbine may alternatively be a horizontal axis wind turbine.

### <Photovoltaic Generator 8>

The photovoltaic generator 8 includes a solar panel 8a that receives sunlight for photoelectric conversion and a panel mount 8b that attaches the solar panel 8a to the structure 4. In the instant example, the solar panel 8a is attached onto the top wall 4a of the structure 4 by means of the panel mount 8b. Depending on the direction of solar radiation or the installation environment, the solar panel 8a may alternatively be disposed on a given one of the peripheral walls 4c (Fig. 3) of the structure 4 or deployed around the structure 4. The panel mount 8b may be equipped with a mechanism capable of changing the angle of the solar panel 8a according to the direction of the sun.

### <Recirculation Toilet 2>

As illustrated in Fig. 5, the recirculation toilet 2 includes the toilet bowl 5 (which may be referred to simply as a "toilet") which is equipped with a tank 5a (Fig. 4) that stores water, and the purification equipment 6. For instance, a user operates a control lever or the like of the toilet 5 to discharge the water from the tank 5a (Fig. 4). In this way, flushing water with waste is forced to flow into the purification equipment 6. The purification equipment 6 in the instant example includes a treatment tank 19, a sedimentation and separation tank 20, a reaction tank 21, and the load 9. The load 9 comprises a plurality of blowers 22 (e.g., two blowers 22 in the instant example), a plurality of ozone generators 23 (e.g., three ozone generators 23 in the instant example), and a pump 24. The treatment tank 19, the sedimentation and separation tank 20, the reaction tank 21, and the pump 24 are connected through pipes so as to be successively arranged along the direction of flow of the flushing water discharged from the toilet 5. Each of the treatment tank 19 and the sedimentation and separation tank 20 is provided with a blower 22 and an ozone generator 23, whereas the reaction tank 21 is provided with an ozone generator 23.

Each of the treatment tank 19 and the sedimentation and separation tank 20 has a filtering medium (not shown) arranged therein and is fed with air from a corresponding one of the blowers 22 to carry out aeration for wastewater treatment. Then, in the reaction tank 21, odors are removed by ozone. The treatment tank 19, the sedimentation and separation tank 20, and the reaction tank 21 are provided with the respective ozone generators 23 that treat odors. The water processed as it flows through the treatment tank 19, the sedimentation and separation tank 20, and the reaction tank 21 is then pumped back by the action of the pump 24 to the tank of the toilet 5, where it comes from, and goes through the same process all over again. During the process, in general, the blowers 22 necessary for aeration and the ozone generators 23 necessary for deodorization are energized all the time, except for when a power-saving operation which will be discussed later is active, while power generated by the natural energy power generators are used to operate the recirculating toilet unit.

### <Control System and the Like>

The battery 11 stores power generated by the wind turbine generator 7 and the photovoltaic generator 8. The stored power is supplied to the blowers 22, the ozone generators 23, and the pump 24. There may be a drop in the power output from the power generators 7, 8 depending on the season. Still, the battery 11 installed in the power generation unit 3 has the storage capacity for providing power for up to several days, so that non-routine operation is possible in case of emergency.

The control device 10 is comprised of, among other things, a computer, a program that is executed by the computer, and a variety of electronic circuits. The control device 10 applies a control to direct power generated by the power generators 7, 8 into the battery 11 and to draw the directed power in the battery 11 to the blowers 22, the ozone generators 23, and the pump 24. Further, for instance, the control device 10 applies a control to operate the pump 24 for a prescribed duration of time in response to detection of actuation of the control lever. By way of example, the control device 10 includes an AC to DC converter that converts AC power generated by the power generators 7, 8 to a DC voltage that can be stored in the battery 11, and an inverter that converts power stored in the battery 11 to a sinusoidal AC wave, like that of commercial AC power, or to a square AC wave.

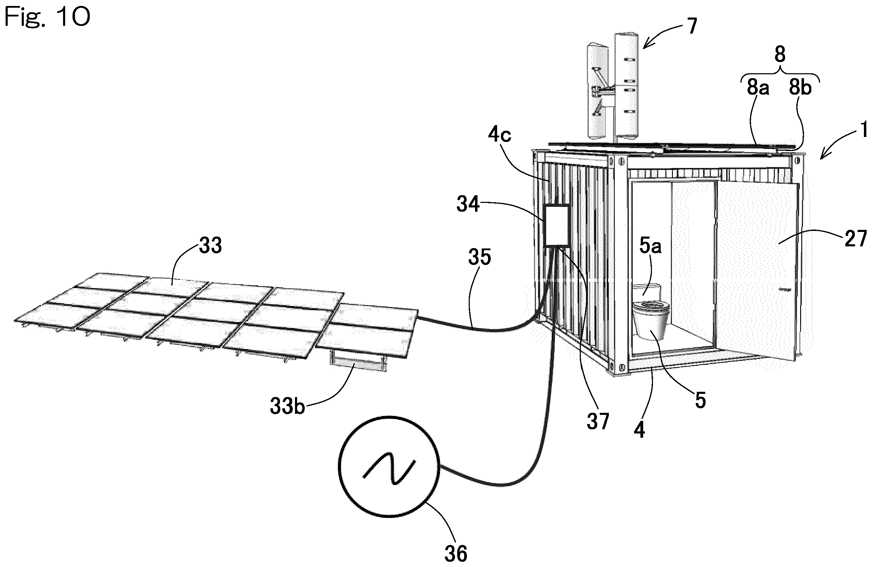

Now, access to natural energy is bound by constraints; energy that can be generated therefrom varies greatly between different seasons. Meanwhile, power consumed by the load such as the blowers 22 has little variation throughout the year. Thus, for instance, in those seasons such as winter in which the level of power generated tends to fall, operation solely relying on natural energy can be challenging. As such, an effective measure that can be taken thereagainst is to compensate for a drop - e.g., a seasonal drop - in the level of power generated (Fig. 10) through a technique which will be discussed later, or to reduce the power fed to the load 9.

The recirculating toilet unit is provided with a sensor 25 used to count the number of users of the recirculating toilet unit and a sensor 26 used to determine a contamination level of the treatment tank 19. For example, a magnetic sensor that senses the opening and closing of an openable and closable door 27 (Fig. 4) of the toilet 5 is employed as the sensor 25 used to count the number of users. Nevertheless, the magnetic sensor is only one of non-limiting examples of the sensor 25 used to count the number of users, and a variety of sensors can be employed therefor instead.

For example, a sensor that measures a light transmittance of the water in the treatment tank 19 is employed as the sensor 26 used to determine the contamination level. The light transmittance of the water in the treatment tank 19 changes with an increase of extraneous matter responsible for contamination of the water. Hence, the light transmittance of the water in the treatment tank 19 can be measured to determine the contamination level of the treatment tank 19. The sensor 26 in this case includes a light source and a light receiving module that is used to measure transmission of the light that is emitted from the light source and passes through the water in the treatment tank 19.

For example, a light-emitting diode, an incandescent lamp, a semiconductor laser diode, electroluminescence (EL in short), an organic EL, or a fluorescent tube can be used for the light source. For example, a photodiode, a phototransistor, a solar cell, or a photomultiplier tube can be used for the light receiving module. For example, a sensor that senses the pH of water, etc. may be employed as the sensor used to determine the contamination level.

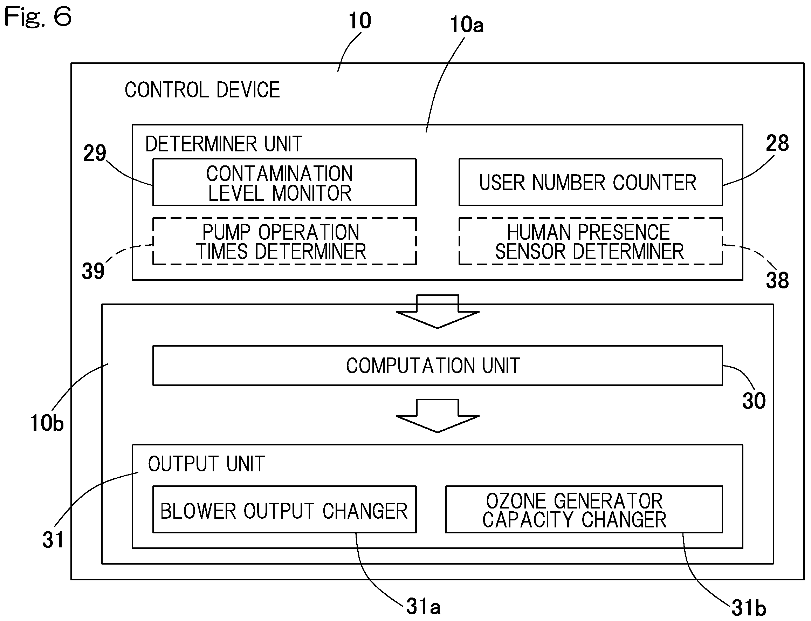

As illustrated in Fig. 6, the control device 10 includes a determiner unit 10a configured to determine each of the sensor outputs, and a load operating condition adjuster 10b. The determiner unit 10a in the instant example includes a user number counter 28 serving as a user number counting module and a contamination level monitor 29 serving as a contamination level determining module. The user number counter 28 counts the number of users of the recirculation toilet, for example, per selected period of time, by determining the output of the sensor 25 (Fig. 5). The contamination level monitor 29 determines the contamination level of the purification equipment 6 (Fig. 5) by determining the output of the sensor 26 (Fig. 5).

The load operating condition adjuster 10b includes a computation unit 30 and an output unit 31. The computation unit 30 uses the information from the user number counter 28 or the contamination level monitor 29 to compute an optimal output for the blowers 22 (Fig. 5) and an optimal capacity for the ozone generators 23 (Fig. 5). The output unit 31 adjusts the operating conditions of the blowers 22 (Fig. 5) and the ozone generators 23 (Fig. 5) such that the values or the operation states computed by the computation unit 30 are reached.

More specifically, a blower output changer module 31a executes power-saving operation, for example, by restricting the output of a blower or blowers such that this particular output is reduced as the number of users determined by the user number counter 28 decreases or as the contamination level determined by the contamination level monitor 29 decreases, or by intermittently operating a blower or blowers as a function of such a decrease. At the same time, an ozone generator capacity changer module 31b executes power-saving operation, for example, by restricting the capacity of an ozone generator or ozone generators such that this particular capacity is reduced as the number of users determined by the user number counter 28 decreases or as the contamination level determined by the contamination level monitor 29 decreases, or by intermittently operating an ozone generator or ozone generators as a function of such a decrease. The relationship between the number of users or the contamination level on the one hand and the output of a blower or blowers or any other such parameter on the other hand is predefined through at least one of experiments or simulations. By thus adjusting operating conditions of the blowers and the ozone generators as a function of the number of users or the contamination level, the power fed to the blowers and the ozone generators can be saved while cleanly operating and maintaining the recirculating toilet unit. Note that the power-saving operations may be omitted, thus, operating the blowers and the ozone generators at all times.

Now, a variant which differs from the preceding example by the configuration of the control device 10 will be described.

The purification equipment 6 may face the problem that a specified water quality may not be maintained when a surge in the number of users of the recirculation toilet 2 outpaces its filtration treatment throughput. For this reason, it is crucial to keep an accurate track of the number of users of the recirculation toilet 2 or the contamination level of the purification equipment 6. Energy that can be generated with natural energy power generators alone varies greatly between different seasons. Meanwhile, power consumed by the load such as the blowers 22 has little variation throughout the year. Thus, for instance, in those seasons such as winter in which the level of power generated tends to fall, operation solely relying on natural energy can be challenging. Therefore, the power aspect also adds to the possibility that the treatment by the purification equipment 6 may not keep up with the demand.

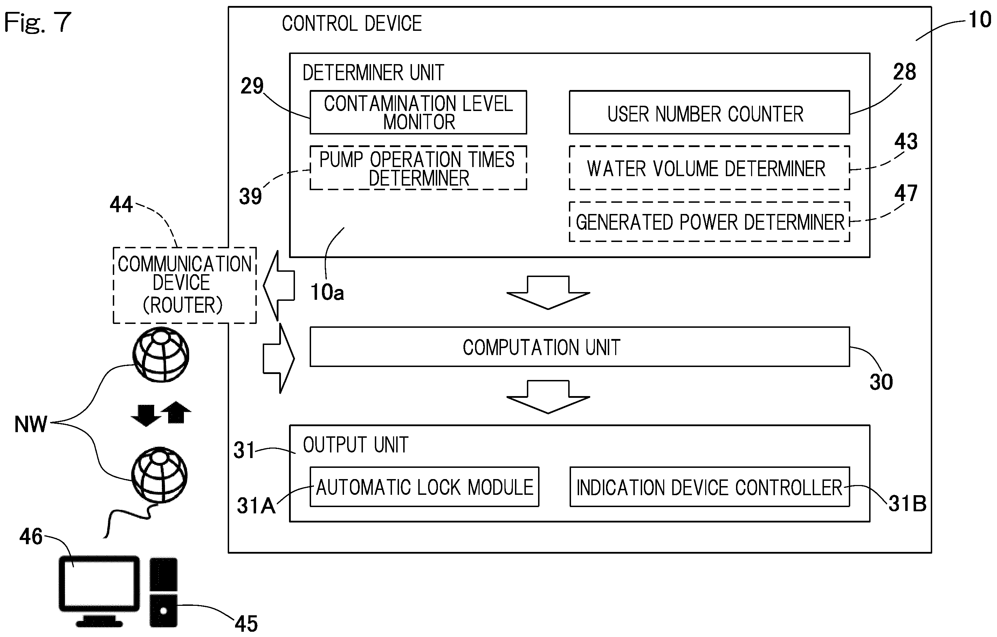

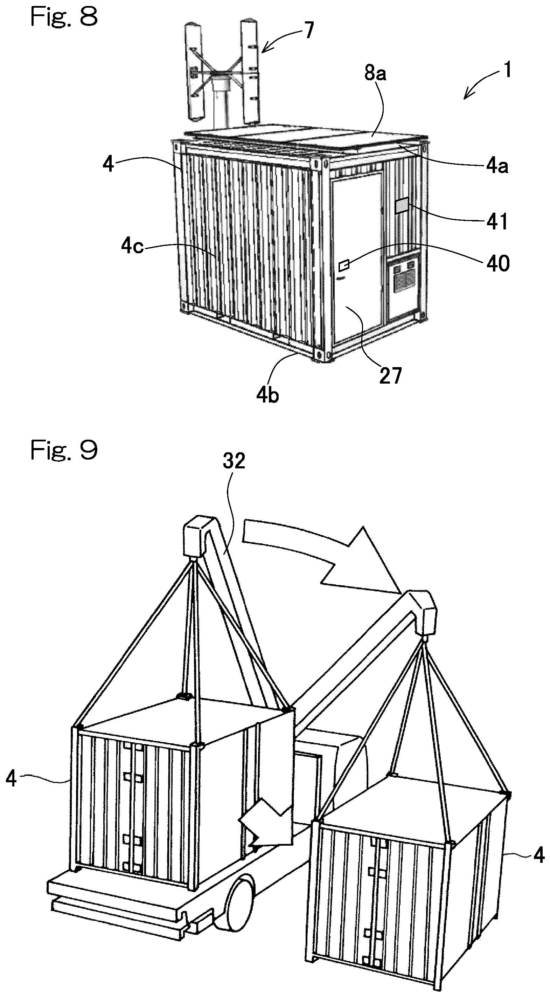

Fig. 7 shows a control flow that addresses this issue. Referring to Fig. 5, when the treatment by the purification equipment 6 does not keep up with the demand, an indication should be provided to users that the recirculation toilet 2 cannot be used. The control device 10 determines whether the recirculation toilet 2 should not be used, on the basis of a determined use state of the recirculation toilet 2, namely, the contamination level or the number of the users. Once the contamination level or the number of the users exceeds a respective one of criterion values, the control device 10 controls an electronic lock 40 shown in Fig. 8 so as to lock the openable and closable door 27 of the recirculation toilet 2 and controls an indication device 41 so as to indicate that the recirculation toilet 2 cannot be used.

Although not illustrated, the electronic lock 40 includes, for example, a dead bolt, a drive that drives the dead bolt into a lock position or an unlock position, and a driver circuit that provides a drive signal to the drive. The driver circuit produces the drive signal in response to a locking command or an unlocking command which is outputted from an automatic lock module 31A (Fig. 7) which will be discussed later.

For example, an indicator or other such device is used for the indication device 41, and the indication device 41 is arranged at an upper portion of a peripheral wall 4c of the structure 4. The criterion values are each defined as appropriate during, for example, a design phase. For instance, appropriate values are determined and defined through at least one of experiments or simulations.

### <Sensors>

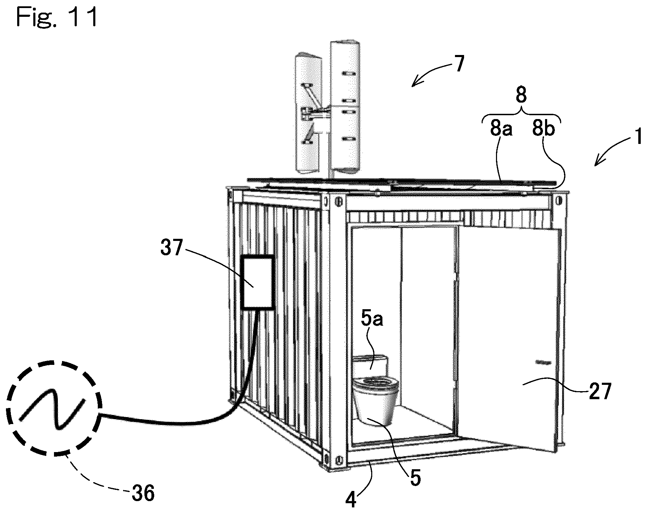

As illustrated in Fig. 5, the recirculating toilet unit is provided with the sensor 25 used to count the number of users of the recirculation toilet 2 and the sensor 26 used to determine a contamination level of the treatment tank 19. For example, a magnetic sensor that senses the opening and closing of the openable and closable door 27 (Fig. 11) of the recirculation toilet 2 is employed as the sensor 25 used to count the number of users. Nevertheless, the magnetic sensor is only one of non-limiting examples of the sensor 25 used to count the number of users, and a variety of sensors can be employed therefor instead.

For example, a sensor that measures a light transmittance of the water in the treatment tank 19 is employed as the sensor 26 used to determine the contamination level. The light transmittance of the water in the treatment tank 19 changes with an increase of extraneous matter responsible for contamination of the water. Hence, the light transmittance of the water in the treatment tank 19 can be measured to determine the contamination level of the treatment tank 19. The sensor 26 in this case includes a light source and a light receiving module that is used to measure transmission of the light that is emitted from the light source and passes through the water in the treatment tank 19.

For example, a light-emitting diode, an incandescent lamp, a semiconductor laser diode, electroluminescence (EL in short), an organic EL, or a fluorescent tube can be used for the light source. For example, a photodiode, a phototransistor, a solar cell, or a photomultiplier tube can be used for the light receiving module. For example, a sensor that senses the pH of water, etc. may be employed as the sensor used to determine the contamination level.

As illustrated in Fig. 7, the control device 10 includes a determiner unit 10a configured to determine each of the sensor outputs, a computation unit 30, and an output unit 31. The determiner unit 10a includes a user number counter 28 serving as a user number counting module and a contamination level monitor 29 serving as a contamination level determining module. The user number counter 28 counts the number of users of the recirculation toilet, for example, per selected period of time, by determining the output of the sensor 25 (Fig. 5). The contamination level monitor 29 determines the contamination level of the purification equipment 6 (Fig. 5) by determining the output of the sensor 26 (Fig. 5).

The computation unit 30 computes whether or not the number of users determined by the user number counter 28 exceeds a criterion value, and constantly or regularly computes whether or not the contamination level determined by the contamination level monitor 29 exceeds a criterion value.

The output unit 31 includes the automatic lock module 31A and an indication device control module 31B. The automatic lock module 31A locks the electronic lock 40 (Fig. 8) for the openable and closable door 27 which is in the unlock position, upon receiving from the computation unit 30 a determination that the number of users exceeds the criterion value or the contamination level exceeds the criterion value. At the same time, the indication device control module 31B controls the indication device 41 (Fig. 8) so as to indicate that the recirculation toilet cannot be used.

Further, for example, the automatic lock module 31A may lock the electronic lock 40 (Fig. 8) as soon as it is determined that no one is present inside a toilet stall with the aid of a human presence sensor determiner module, which is provided in the control device 10 to determine the output of a human presence sensor (not shown) installed in the toilet stall. For example, a sensor that senses an infrared radiation emitted from a user or a sound sensor that operates in response to sound may be employed as the human presence sensor. Note that the electronic lock 40 (Fig. 8) may be designed so that it can be manually unlocked by a user in the toilet stall, for instance, in case the human presence sensor determiner module or the like make an erroneous determination.

### <Installation of Recirculating Toilet Unit>

As illustrated in Fig. 9, the structure 4 housing, among others, the recirculation toilet 2 (Fig. 1) and the power generation unit 3 (Fig. 1) is transported to a desired installation site by, for example, a truck loader crane (or a truck-mounted crane). Then, the structure 4 is unloaded by a crane 32 on the truck-mounted crane. Alternatively, a forklift, a gantry crane (both not shown), etc. may be used to unload the structure 4 from a given one of said variety of transport means. At least one of the wind turbine generator, the photovoltaic generator, the control device, or the battery may be transported separately from the structure 4.

Subsequently, the wind turbine generator and the photovoltaic generator housed in the structure 4 are deployed out of the container and are attached to desired locations on the structure 4. Then, each of the power generators 7, 8 (Fig. 1) is ready to initiate power generation so that the recirculating toilet unit can begin its operation.

### <Effects and Advantages>

The recirculating toilet unit discussed thus far permits use of a natural energy power generator, e.g., the wind turbine generator 7 or the photovoltaic generator 8 of Fig. 1, to provide power to the load 9 (Fig. 5) of the purification equipment 6, thereby making it possible to cleanly operate and maintain the recirculating toilet unit 1 even at locations where there is no access to a grid power system. Thus, the possibilities for installation locations of the recirculating toilet unit 1 can be increased. Since the recirculating toilet unit 1 includes more than one natural energy power generator including the wind turbine generator 7 and the photovoltaic generator 8, the power generation is less sensitive to constrains including weather conditions, a natural environment such as a terrain, and daytime versus nighttime, and thus power can efficiently be accumulated in the battery 11 (Fig. 5).

Further, the recirculating toilet unit also includes the structure 4 which carries the recirculation toilet 2 and the power generation unit 3, the structure 4 being transportable. Hence, the structure with the recirculation toilet 2 and the power generation unit 3 mounted thereto can be transported and installed altogether in an integrated fashion, thereby making it possible to install the recirculating toilet unit 1 more conveniently than a conventional counterpart which requires separate transportation of a toilet, a plurality of treatment tanks, a control device, etc. before installation. As such, a recirculating toilet unit 1 which has an excellent transportability and can, therefore, lead to a reduced installation cost can be realized. Furthermore, the transportable recirculating toilet unit 1 is useful in case of emergency such as in the event of disasters.

The automatic lock module 31A of Fig. 7 locks the openable and closable door 27 of the recirculation toilet 2 of Fig. 1, once the use state of the recirculation toilet 2 exceeds a criterion value. Conversely, the automatic lock module 31A (Fig. 7) unlocks the electronic lock 40 shown in Fig. 8 for the openable and closable door 27 of the recirculation toilet 2, and the indication device control module 31B controls the indication device 31 so as to indicate that the recirculation toilet 2 cannot be used, once the use state of the recirculation toilet 2 returns to the criterion value or lower. By thus restricting use of the recirculation toilet 2 when the treatment throughput of the recirculating toilet unit 1 does not keep up with the demand it is possible to continue cleanly operating and maintaining the recirculating toilet unit 1. Further, by causing the indication device 41 to indicate whether the recirculation toilet 2 can or cannot be used, the usability of the recirculation toilet 2 for those who want to use the recirculation toilet 2 can be improved.

The structure with the recirculation toilet 2, the power generators 7, 8, and the control device 10 of Fig. 5 mounted thereto can be transported and installed altogether in an integrated fashion, thereby making it possible to install the recirculating toilet unit more conveniently than those which require separate transportation of a toilet bowl, a plurality of treatment tanks, a control device, etc. before installation. As such, a recirculating toilet unit which has an excellent transportability and can, therefore, lead to a reduced installation cost can be realized.

### <Further Embodiments>

In the following description, the same reference numerals are used to denote features that correspond to those previously described in the respective embodiments, and overlapping description is omitted. Where only a part of a configuration is described, the rest of the configuration is to be construed as being the same as the previously described embodiments unless otherwise indicated. The same configurations provide the same effects.

### <Field-Assembled Solar Panel>

As illustrated in Fig. 10, the recirculating toilet unit may further include a solar panel 33 which is separate from the photovoltaic generator 8 and produces power supply for the load 9 (Fig. 5). Note that, when the unit includes the separate solar panel 33, this separate solar panel will be secured on the ground or the like. Therefore, it may not be possible to ensure transportability of the recirculating toilet unit 1 once an electrical connection is established between the control device in the structure 4 and the separate solar panel 33 which is secured on the ground or the like. Thus, to facilitate the transportation of the recirculating toilet unit 1 to another location in the event of emergency, etc., the separate solar panel 33 should be made easily removable.

Hence, the separate solar panel 33 is capable of being connected to and disconnected from an electrical connection unit 34 provided to the structure 4. The electrical connection unit 34 in the form of a connector is, for example, located at one of the peripheral walls 4c of the structure 4. The connector is electrically connected to the control device 10 (Fig. 5) inside the structure 4. The separate solar panel 33 is installed to the ground through a panel mount 33b and thereby forms a so-called, field-assembled solar panel which is capable of being connected to and disconnected from the electrical connection unit 34 via a power cable 35. When the separate solar panel 33 is connected to the electrical connection unit 34, additional power can be generated. When the separate solar panel 33 is disconnected from the electrical connection unit 34, convenient transfer of the recirculating toilet unit 1 can be facilitated.

### <Grid Power System Connection Unit>

The power generation unit 3 (Fig. 5) may include a grid power system connection unit 37 that receives power supplied from a grid power system 36. This, for example, makes it possible to use the wind turbine generator 7 or the photovoltaic generator 8 as a primary power supply while using the grid power system 36 to compensate for temporary shortage of power generation or, alternatively, to use the grid power system 36 as a primary power supply while utilizing the wind turbine generator 7 or the photovoltaic generator 8 as a backup power supply in the event of a power outage, once the recirculating toilet unit 1 is installed at a location where it can connect to the grid power system 36.

As illustrated in Fig. 11, the recirculating toilet unit 1 in accordance with the above-described variant includes the grid power system connection unit 37 that supply the load 9 (Fig. 5) with power from the grid power system 36, and the control device 10 (Fig. 5) may apply a control to supply the load 9 (Fig. 5) with power via the grid power system connection unit 37. The grid power system connection unit 37 is, for example, located at one of the peripheral walls 4c of the structure 4. For example, this also makes it possible to use the wind turbine generator 7 or the photovoltaic generator 8 as a primary power supply while using the grid power system 36 to compensate for temporary shortage of power generation or, alternatively, to use the grid power system 36 as a primary power supply while utilizing the wind turbine generator 7 or the photovoltaic generator 8 as a backup power supply in the event of a power outage, once the recirculating toilet unit 1 is installed at a location where it can connect to the grid power system 36.

The recirculating toilet unit may also include, for example, a human presence sensor in the toilet stall to serve as the sensor used to count the number of users. For example, a sensor that senses an infrared radiation emitted from a user or a sound sensor that operates in response to sound may be employed as the human presence sensor.

Referring to Fig. 6, the control device 10 in this case includes a human presence sensor determiner module 38 to serve as the user number counting module. The human presence sensor determiner module 38 counts the number of users of the recirculation toilet, for example, per selected period of time, by determining the output of the human presence sensor. The computation unit 30 uses the information from the human presence sensor determiner module 38 or the contamination level monitor 29 to compute an optimal output for the blowers and an optimal capacity for the ozone generators. The output unit 31 adjusts the operating conditions of the blowers and the ozone generators such that the values or the operation states computed by the computation unit 30 are reached.

The control device 10 may include a pump operation times determiner module 39 that determines the number of operation times of the pump, for example, per selected period of time, to serve as the user number counting module. The determined number of operation times of the pump can be used to derive the number of users of the recirculation toilet. The computation unit 30 uses the information from the pump operation times determiner module 39 or the contamination level monitor 29 to compute an optimal output for the blowers and an optimal capacity for the ozone generators. The output unit 31 adjusts the operating conditions of the blowers and the ozone generators such that the values or the operation states computed by the computation unit 30 are reached.

The computation unit 30 may determine the number of users, on the basis of the determinations made by at least two of the user number counter 28, the human presence sensor determiner module 38, and the pump operation times determiner module 39. In this case, the number of users can be determined more accurately.

In the variant shown in Fig. 7, the control device 10 may include the pump operation times determiner module 39 that determines the number of operation times of the pump, for example, per selected period of time, to serve as the user number counting module. The determined number of operation times of the pump 24 (Fig. 5) can be used to derive the number of users of the recirculation toilet. The computation unit 30, for instance, multiplies the number of operation times, as determined by the pump operation times determiner module 39, with a predetermined coefficient, etc. in order to calculate the number of users and computes whether or not the calculated number of users exceeds a criterion value. The relationship between the number of operation times, the coefficient, and the number of users is predefined through experiments, simulations, etc.

As illustrated in Fig. 5, the recirculating toilet unit may include a water volume sensor 42 that senses the volume of water in the treatment tank 19 to serve as the sensor used to determine a count of the number of users. The level of water in the treatment tank 19 decreases progressively as the number of users of the recirculation toilet 2 increases. For example, a float-based level sensor that uses a float to measure the position of the liquid level of the treatment tank 19 or a pressure-based level sensor that measures the position of the liquid level on the basis of the pressure at the bottom of the vessel may be employed as the water volume sensor 42. The relationship between the volume of water in the treatment tank 19 and the number of users is predefined through experiments, simulations, etc.

Referring to Fig. 7, the control device 10 in this case includes a water volume determiner module 43 to serve as the user number counting module. The water volume determiner module 43 counts the number of users of the recirculation toilet, for example, per selected period of time, by determining the output of the water volume sensor 42 (Fig. 5).

The level of power generated by the power generators 7, 8 and stored in the battery 11 shown in Fig. 5 is determined by a generated power determiner module 47 which is shown in Fig. 7 and comprises a generated power measurement circuit such as a power meter. The automatic lock module 31A may lock the electronic lock 40 (Fig. 8) for the openable and closable door 27 (Fig. 8) which is in the unlock position, once the level of generated power determined by the generated power determiner module 47 drops down to or below a threshold value. At the same time, the indication device control module 31B controls the indication device 41 (Fig. 8) so as to indicate that the recirculation toilet cannot be used. Conversely, the automatic lock module 31A unlocks the electronic lock 40 (Fig. 8) for the openable and closable door of the recirculation toilet, once the level of power generated and stored exceeds the threshold value. At the same time, the indication device control module 31B controls the indication device 41 (Fig. 8) so as to indicate that the recirculation toilet can be used. By thus restricting use of the recirculation toilet when the level of power generated is inadequate, it is possible to continue cleanly operating and maintaining the recirculating toilet unit.

The recirculating toilet unit may also include a communication device 44 that allows the electronic lock 40 (Fig. 8) for the openable and closable door of the recirculating toilet unit to be remotely locked or unlocked.

For instance, the number of users of the recirculation toilet, the contamination level of the purification equipment, and the level of power generated and stored in the battery (or the remaining battery power) can be remotely monitored on a server 45 by a person or entity responsible for the management of the recirculating toilet unit, for example, over a network NW. The control device 10 of the recirculating toilet unit transmits, at prescribed intervals, the number of users, the contamination level, and the remaining battery power to the server 45 via the communication device 44, etc. A computer at the server 45 stores the received number of users, contamination level, and remaining battery power in an overwritable manner and outputs the same on a monitor 46. According to the status that is outputted on the monitor 46, said person or entity, or the like can use the computer so as to remotely lock or unlock the electronic lock 40 (Fig. 8) via the communication device 44. In this way, the usability of the recirculation toilet for those who want to use the recirculation toilet can be further improved.

The computation unit 30 may determine the number of users, on the basis of the determinations made by at least two of the user number counter 28, the pump operation times determiner module 39, or the water volume determiner module 43. In this case, the number of users can be determined more accurately.

The recirculating toilet unit may include only one of the wind turbine power generator or the photovoltaic generator.

Also, any of the ozone generators at the purification equipment can be omitted.

As an alternative to the shipping container, the structure may comprise a simple transportable building.

### <Proposed Reference Examples>

The electronic lock may be omitted, so that only the indication device is provided to serve as a device that restricts the use of the recirculation toilet. A recirculating toilet unit in accordance with such a proposed reference example may be described as follows:
the indication device is configured to indicate whether the recirculation toilet can or cannot be used,
wherein the control device is configured to cause the indication device to indicate that the recirculation toilet cannot be used, once a use state of the recirculation toilet exceeds a criterion value or once a level of power generated by the power generator for storage drops down to or below a threshold value.

While configurations to carry out the present invention have thus far been described on the basis of embodiments, the embodiments disclosed herein are illustrative and not restrictive in all respects. The scope of the present invention is to be indicated by the appended claims rather than by the foregoing description, and is meant to embrace all changes made within the meaning and range of equivalency to the appended claims.

### [Reference Symbols]

- 1: recirculating toilet unit
- 2: recirculation toilet
- 3: power generation unit
- 4: structure
- 5: toilet bowl
- 6: purification equipment
- 7: wind turbine generator
- 8: photovoltaic generator
- 9: load
- 10: control device
- 10b: load operating condition adjuster
- 27: openable and closable door
- 28: user number counter (user number counting module)
- 29: contamination level monitor (contamination level determining module)
- 31A: automatic lock module
- 33: solar panel
- 34: electrical connection unit
- 36: grid power system
- 37: grid power system connection unit
- 38: human presence sensor determiner module (user number counting module)
- 39: pump operation times determiner module (user number counting module)
- 41: indication device
- 44: communication device

## Claims

1. A recirculating toilet unit (1) comprising:
a recirculation toilet (2) including a purification equipment (6) and configured to purify flushing water containing waste and discharged from a toilet bowl (5), through the purification equipment (6) and to recirculate purified water to be used as flushing water;
a power generation unit (3) including at least one power generator selected from a wind turbine generator (7) and a photovoltaic generator (8) and configured to supply a load of the purification equipment (6) with power from the power generator for recirculation and purification of the flushing water; and
a structure which carries the recirculation toilet (2) and the power generation unit (3), the structure being transportable,
wherein the power generation unit (3) includes a control device (10) configured to apply a control to supply the load with power generated by the power generator,
the recirculating toilet unit (1) being **characterized in that** the control device (10) includes a user number counting module configured to count the number of users of the recirculation toilet (2) and a load operating condition adjuster (10b) configured to adjust an operating condition of the load as a function of the number of users determined by the user number counting module.

2. The recirculating toilet unit (1) as claimed in claim 1, comprising:
the photovoltaic generator (8) attached to the top wall or one of peripheral walls of the structure, and
a separate solar panel which is separated from the photovoltaic generator (8) and is configured to be secured to the ground and to produce power supply for the load, the separate solar panel being capable of being connected to and disconnected from an electrical connection unit provided to the structure.

3. The recirculating toilet unit (1) as claimed in claim 1 or 2, wherein the power generation unit (3) includes a grid power system connection unit configured to receive power supplied from a grid power system.

4. The recirculating toilet unit (1) as claimed in any one of claims 1 to 3, wherein the control device (10) includes a contamination level determining module configured to determine a contamination level of the purification equipment (6) and the load operating condition adjuster (10b) configured to adjust an operating condition of the load as a function of the contamination level determined by the contamination level determining module.

5. The recirculating toilet unit (1) as claimed in any one of claims 1 to 4, wherein the control device (10) includes a mechanism configured to disable use of the recirculation toilet (2) once a use state of the recirculation toilet (2) exceeds a criterion value or once a level of power generated by the power generator for storage drops down to or below a threshold value.

6. The recirculating toilet unit (1) as claimed in claim 5, wherein the mechanism configured to disable use of the recirculation toilet (2) comprises an automatic lock module configured to lock an openable and closable door (27).

7. The recirculating toilet unit (1) as claimed in claim 5 or 6, comprising:
an indication device configured to indicate whether the recirculation toilet (2) can or cannot be used,
wherein the control device (10) is configured to cause the indication device to indicate that the recirculation toilet (2) cannot be used, once the criterion value is exceeded or once the level of power generated drops down to or below the threshold value.

8. The recirculating toilet unit (1) as claimed in any one of claims 5 to 7, comprising:
a grid power system connection unit or the grid power system connection unit, respectively, configured to supply the load with power from a grid power system,
wherein the control device (10) is configured to apply a control to supply the load with power via the grid power system connection unit.

9. The recirculating toilet unit (1) as claimed in any one of claims 5 to 8, further comprising: the recirculation toilet (2) having an openable and closable door (27); and
a communication device configured to allow the openable and closable door (27) to be remotely locked or unlocked.

10. The recirculating toilet unit (1) as claimed in any one of claims 5 to 9, wherein the structure carries the control device (10) mounted thereto in addition to the recirculation toilet (2) and the power generator unit (3).

11. The recirculating toilet unit (1) as claimed in any one of claims 1 to 10, wherein the structure comprises a shipping container.

## Patentansprüche

1. Umwälztoiletteneinheit (1), umfassend:
eine Umwälztoilette (2), die eine Reinigungsanlage (6) enthält und so eingerichtet ist, dass sie abfallhaltiges Spülwasser, das aus einer Toilettenschüssel (5) abgeleitet wird, durch die Reinigungsanlage (6) reinigt und das gereinigte Wasser zu der Verwendung als Spülwasser umwälzt;
eine Stromgenerationseinheit (3), die mindestens einen Stromgenerator enthält, der aus einem Windturbinengenerator (7) und einem Photovoltaikgenerator (8) ausgewählt und so eingerichtet ist, dass er eine Last der Reinigungsanlage (6) mit Strom aus dem Stromgenerator zu der Umwälzung und Reinigung des Spülwassers versorgt; und
eine Konstruktion, die die Umwälztoilette (2) und die Stromgenerationseinheit (3) trägt, wobei die Konstruktion transportabel ist,
wobei die Stromgenerationseinheit (3) eine Steuervorrichtung (10) enthält, die so eingerichtet ist, dass sie eine Steuerung anwendet, um die Last mit von dem Stromgenerator generiertem Strom zu versorgen,
wobei die Umwälztoiletteneinheit (1) **dadurch gekennzeichnet ist, dass** die Steuervorrichtung (10) ein Benutzeranzahl-Zählmodul enthält, das so eingerichtet ist, dass es die Anzahl der Benutzer der Umwälztoilette (2) zählt, sowie eine Lastbetriebszustand-Einstellvorrichtung (10b), die so eingerichtet ist, dass sie einen Betriebszustand der Last in Abhängigkeit von der durch das Benutzeranzahl-Zählmodul bestimmten Anzahl der Benutzer einstellt.

2. Umwälztoiletteneinheit (1) nach Anspruch 1, umfassend:
den Photovoltaikgenerator (8), der an der oberen Wand oder einer der Umfangswände der Konstruktion befestigt ist, und
ein separates Solarpanel, das von dem Photovoltaikgenerator (8) getrennt ist und so eingerichtet ist, dass es an dem Boden befestigt wird und die Stromversorgung für die Last erzeugt, wobei das separate Solarpanel mit einer elektrischen Anschlusseinheit, die an der Konstruktion vorgesehen ist, verbunden und von dieser getrennt werden kann.

3. Umwälztoiletteneinheit (1) nach Anspruch 1 oder 2, wobei die Stromgenerationseinheit (3) eine Netzstromsystem-Anschlusseinheit enthält, die so eingerichtet ist, dass sie Strom empfängt, der von einem Netzstromsystem geliefert wird.

4. Umwälztoiletteneinheit (1) nach einem der Ansprüche 1 bis 3, wobei die Steuervorrichtung (10) ein Kontaminationsgrad-Bestimmungsmodul enthält, das so eingerichtet ist, dass es einen Kontaminationsgrad der Reinigungsanlage (6) bestimmt, sowie die Betriebszustand-Lasteinstellvorrichtung (10b), die so eingerichtet ist, dass sie einen Betriebszustand der Last in Abhängigkeit von dem durch das Kontaminationsgrad-Bestimmungsmodul bestimmten Kontaminationsgrad einstellt.

5. Umwälztoiletteneinheit (1) nach einem der Ansprüche 1 bis 4, wobei die Steuervorrichtung (10) einen Mechanismus enthält, der so eingerichtet ist, dass er die Nutzung der Umwälztoilette (2) sperrt, sobald ein Nutzungszustand der Umwälztoilette (2) einen Kriteriumswert überschreitet oder sobald ein von dem Stromgenerator für die Speicherung generierter Strompegel auf einen Schwellenwert oder darunter abfällt.

6. Umwälztoiletteneinheit (1) nach Anspruch 5, wobei der Mechanismus, der so eingerichtet ist, dass er die Nutzung der Umwälztoilette (2) sperrt, ein automatisches Verriegelungsmodul umfasst, das so eingerichtet ist, dass es eine zu öffnende und zu schließende Tür (27) verriegelt.

7. Umwälztoiletteneinheit (1) nach Anspruch 5 oder 6, umfassend:
eine Anzeigevorrichtung, die so eingerichtet ist, dass sie anzeigt, ob die Umwälztoilette (2) genutzt werden kann oder nicht,
wobei die Steuervorrichtung (10) so eingerichtet ist, dass sie die Anzeigevorrichtung dazu veranlasst, anzuzeigen, dass die Umwälztoilette (2) nicht genutzt werden kann, sobald der Kriteriumswert überschritten wird oder sobald der Pegel des generierten Stroms auf den Schwellenwert oder darunter abfällt.

8. Umwälztoiletteneinheit (1) nach einem der Ansprüche 5 bis 7, umfassend:
eine Netzstromsystem-Anschlusseinheit bzw. die Netzstromsystem-Anschlusseinheit, die so eingerichtet ist, dass sie die Last mit Strom aus einem Netzstromsystem versorgt,
wobei die Steuervorrichtung (10) so eingerichtet ist, dass sie eine Steuerung anwendet, um die Last über die Netzstromsystem-Anschlusseinheit mit Strom zu versorgen.

9. Umwälztoiletteneinheit (1) nach einem der Ansprüche 5 bis 8, ferner umfassend: die Umwälztoilette (2) mit einer zu öffnenden und zu schließenden Tür (27); und
eine Kommunikationsvorrichtung, die so eingerichtet ist, dass sie es ermöglicht, dass die zu öffnende und zu schließende Tür (27) fernverriegelt oder -entriegelt wird.

10. Umwälztoiletteneinheit (1) nach einem der Ansprüche 5 bis 9, wobei die Konstruktion zusätzlich zu der Umwälztoilette (2) und der Stromgeneratoreinheit (3) die daran montierte Steuervorrichtung (10) trägt.

11. Umwälztoiletteneinheit (1) nach einem der Ansprüche 1 bis 10, wobei die Konstruktion einen Versandbehälter umfasst.

## Revendications

1. Unité de toilettes à recirculation (1) comprenant :
des toilettes à recirculation (2) comportant un équipement de purification (6) et configurées pour purifier de l'eau de chasse contenant des déchets et évacuée d'une cuvette de toilettes (5), à travers l'équipement de purification (6), et pour faire recirculer l'eau purifiée afin qu'elle soit utilisée comme eau de chasse ;
une unité de génération d'énergie (3) comportant au moins un générateur d'énergie sélectionné parmi un générateur d'énergie éolien (7) et un générateur photovoltaïque (8) et configurée pour alimenter une charge de l'équipement de purification (6) en énergie provenant du générateur d'énergie afin de faire recirculer et de purifier l'eau de chasse ; et
une structure supportant les toilettes à recirculation (2) et l'unité de génération d'énergie (3), la structure étant transportable,
dans laquelle l'unité de génération d'énergie (3) comporte un dispositif de commande (10) configuré pour appliquer une commande afin d'alimenter la charge en énergie générée par le générateur d'énergie,
l'unité de toilettes à recirculation (1) étant **caractérisée en ce que** le dispositif de commande (10) comporte un module de comptage de nombre d'utilisateurs configuré pour compter le nombre d'utilisateurs des toilettes à recirculation (2) et un dispositif de réglage de condition de fonctionnement de charge (10b) configuré pour régler une condition de fonctionnement de la charge en fonction du nombre d'utilisateurs déterminé par le module de comptage de nombre d'utilisateurs.

2. Unité de toilettes à recirculation (1) selon la revendication 1, comprenant :
le générateur photovoltaïque (8) fixé à la paroi supérieure ou à l'une des parois périphériques de la structure, et
un panneau solaire séparé qui est séparé du générateur photovoltaïque (8) et est configuré pour être fixé au sol et pour produire une alimentation électrique pour la charge, le panneau solaire séparé étant apte à être connecté à et déconnecté d'une unité de connexion électrique disposée sur la structure.

3. Unité de toilettes à recirculation (1) selon la revendication 1 ou 2, dans laquelle l'unité de génération d'énergie (3) comporte une unité de connexion de système d'alimentation secteur configurée pour recevoir une alimentation en énergie fournie par un système d'alimentation secteur.

4. Unité de toilettes à recirculation (1) selon l'une des revendications 1 à 3, dans laquelle le dispositif de commande (10) comporte un module de détermination de niveau de contamination configuré pour déterminer un niveau de contamination de l'équipement de purification (6) et le dispositif de réglage de condition de fonctionnement de charge (10b) configuré pour régler une condition de fonctionnement de la charge en fonction du niveau de contamination déterminé par le module de détermination de niveau de contamination.

5. Unité de toilettes à recirculation (1) selon l'une des revendications 1 à 4, dans laquelle le dispositif de commande (10) comporte un mécanisme configuré pour mettre les toilettes à recirculation (2) hors service une fois qu'un état d'utilisation des toilettes à recirculation (2) dépasse une valeur de critère ou une fois qu'un niveau d'énergie générée par le générateur d'énergie pour le stockage descend au niveau ou en dessous d'une valeur seuil.

6. Unité de toilettes à recirculation (1) selon la revendication 5, dans laquelle le mécanisme configuré pour mettre les toilettes à recirculation (2) hors service comprend un module de verrouillage automatique configuré pour verrouiller une porte pouvant s'ouvrir et se fermer (27).

7. Unité de toilettes à recirculation (1) selon la revendication 5 ou 6, comprenant :
un dispositif d'indication configuré pour indiquer si les toilettes à recirculation (2) peuvent être utilisées ou non,
dans laquelle le dispositif de commande (10) est configuré pour amener le dispositif d'indication à indiquer que les toilettes à recirculation (2) ne peuvent pas être utilisées, une fois que la valeur de critère est dépassée ou une fois que le niveau d'énergie générée descend au niveau ou en dessous de la valeur seuil.

8. Unité de toilettes à recirculation (1) selon l'une des revendications 5 à 7, comprenant :
une unité de connexion de système d'alimentation secteur ou l'unité de connexion de système d'alimentation secteur, respectivement, configurée pour alimenter la charge en énergie provenant d'un système d'alimentation secteur,
dans laquelle le dispositif de commande (10) est configuré pour appliquer une commande afin d'alimenter la charge en énergie via l'unité de connexion de système d'alimentation secteur.

9. Unité de toilettes à recirculation (1) selon l'une des revendications 5 à 8, comprenant en outre : les toilettes à recirculation (2) ayant une porte pouvant s'ouvrir et se fermer (27) ; et
un dispositif de communication configuré pour permettre le verrouillage ou le déverrouillage à distance de la porte pouvant s'ouvrir et se fermer (27).

10. Unité de toilettes à recirculation (1) selon l'une des revendications 5 à 9, dans laquelle la structure supporte le dispositif de commande (10) monté sur celle-ci en plus des toilettes à recirculation (2) et de l'unité de génération d'énergie (3).

11. Unité de toilettes à recirculation (1) selon l'une des revendications 1 à 10, dans laquelle la structure comprend un conteneur d'expédition.
